# EUROPÄISCHE PATENTANMELDUNG

(11) **EP 3 096 241 A1**
(43) Veröffentlichungstag der Anmeldung: **23.11.2016**
(21) Anmeldenummer: 15168040.2
(22) Anmeldetag: 18.05.2015
(51) Int. Cl.: G06F 17/30

(54) **VERFAHREN ZUM DURCHSUCHEN EINER DATENBASIS MIT DATENSÄTZEN**

(71) Anmelder: Kraus, Carsten, 75173 Pforzheim (DE)
(72) Erfinder: Kraus, Carsten, 75173 Pforzheim (DE)
(74) Vertreter: Reitstötter Kinzebach

(57) **Zusammenfassung**

Die Erfindung betrifft ein Verfahren zum Durchsuchen einer Datenbasis mit Datensätzen (Mᵢ), die Attribute (A¹ᵢ bis Aⁿᵢ) umfassen. Wenn eine Suchanfrage (S) erfasst wird, werden den Datensätzen (Mᵢ) Relevanzdaten (R^{s}ᵢ) für die Suchanfrage (S) zugeordnet und es wird anhand der Relevanzdaten (R^{s}ᵢ) zumindest eine Teilmenge der Datensätze (Mᵢ) ausgegeben. Es werden ferner Interaktionsdaten (I^{s}ᵢ) erfasst über Nutzerinteraktionen mit den Datensätzen (Mᵢ), die zu der Suchanfrage (S) ausgegeben wurden und es werden Korrelationsdaten (K^{S,1} bis K^{S,n}) bestimmt, welche die Korrelation zwischen den einzelnen Attributen (A¹ᵢ bis Aⁿᵢ) und den Interaktionsdaten (I^{S}ᵢ) für die Suchanfrage (S) angeben. Schließlich werden die Relevanzdaten (R^{s}ᵢ) der Datensätze (Mᵢ) für die Suchanfrage (S) erneut erzeugt unter Einbeziehung der Korrelationsdaten (K^{S,1} bis K^{S,n}) und der Attribute (A¹ᵢ bis Aⁿᵢ) der Datensätze (Mᵢ). Die Erfindung betrifft ferner ein Computerprogramm mit Programmcode zur Durchführung des erfindungsgemäßen Verfahrens, wenn der Programmcode von einem Computer ausgeführt wird. Die Erfindung betrifft außerdem eine Suchmaschine (1).

## Beschreibung

Die Erfindung betrifft ein Verfahren zum Durchsuchen einer Datenbasis mit Datensätzen, wobei die Datensätze Attribute umfassen. Sie betrifft ferner ein Computerprogramm mit Programmcode zur Durchführung des erfindungsgemäßen Verfahrens, wenn der Programmcode von einem Computer ausgeführt wird. Die Erfindung betrifft außerdem eine Suchmaschine zum Durchsuchen einer auf einer Datenspeichereinheit gespeicherten Datenbasis mit Datensätzen, wobei die Datensätze Attribute umfassen. Die Suchmaschine umfasst eine Erfassungsschnittstelle, durch die eine Suchanfrage erfassbar ist, eine Relevanzbestimmungseinheit, durch die den Datensätzen Relevanzdaten für die Suchanfrage zuordenbar sind und eine Ausgabeeinheit, durch die anhand der Relevanzdaten zumindest eine Teilmenge der Datensätze ausgebbar ist.

Das Durchsuchen von Datenbanken nach bestimmten Informationen ist eine zentrale Aufgabestellung der modernen Datenverarbeitung. Je größer die Datenbasis ist, desto größer ist der Bedarf für Lösungen, die auf eine Suchanfrage eines Nutzers hin die relevantesten Datensätze ausgeben. Nur so können die in der Datenbasis gespeicherten Informationen für den Nutzer optimal nutzbar gemacht werden. Dies gilt in besonderem Maß für Katalogfunktionen, bei denen die Datensätze beispielsweise einzelnen Produkten entsprechen, etwa in einem Webshop. Der Nutzer erwartet, dass ihm auf eine Suchanfrage hin genau die Produkte angezeigt werden, die für ihn relevant sind. Umgekehrt liegt es im vitalen Interesse eines Webshopbetreibers, dem Nutzer die relevantesten Produkte zu präsentieren. Andere Beispiele sind etwa Bibliothekskataloge, wissenschaftliche Datenbanken, Nachschlagewerke oder Aktenbestände.

Dennoch tritt bei gängigen Suchverfahren das Problem auf, dass irrelevante Datensätze gefunden werden, beispielsweise bei mehrdeutigen Suchbegriffen oder weil durch das verwendete Suchverfahren bedingte Artefakte auftreten. Dies führt dazu, dass etwa in einer nach der ermittelten Relevanz geordneten Liste die tatsächlich relevanten Treffer erst weit unten angezeigt werden und der Nutzer diese Treffer nicht oder nur mit Mühe findet. Eine solche ineffiziente Suchfunktion führt beispielsweise bei einem Webshop zu Frustration auf der Seite des Nutzers und zu Umsatzeinbußen für den Betreiber.

Es ist daher die Aufgabe der vorliegenden Erfindung, ein Verfahren, ein Computerprogramm und eine Suchmaschine bereitzustellen, durch welche die Bestimmung der tatsächlichen Relevanz von Datensätzen für eine Suchanfrage verbessert werden kann.

Diese Aufgabe wird durch ein Verfahren mit den Merkmalen des Anspruchs 1, ein Computerprogramm mit den Merkmalen des Anspruchs 13 sowie eine Suchmaschine mit den Merkmalen der Ansprüche 14 gelöst. Vorteilhafte Ausgestaltungen und Weiterbildungen ergeben sich aus den abhängigen Ansprüchen.

Bei dem erfindungsgemäßen Verfahren werden, wenn eine Suchanfrage erfasst wird, den Datensätzen Relevanzdaten für die Suchanfrage zugeordnet und anhand der Relevanzdaten wird zumindest eine Teilmenge der Datensätze ausgegeben. Anschließend werden Interaktionsdaten erfasst über Nutzerinteraktionen mit den Datensätzen, die zu der Suchanfrage ausgegeben wurden. Es werden Korrelationsdaten bestimmt, welche die Korrelation zwischen den einzelnen Attributen und den Interaktionsdaten für die Suchanfrage angeben. Schließlich werden die Relevanzdaten der Datensätze für die Suchanfrage unter Einbeziehung der Korrelationsdaten und der Attribute der Datensätze erneut erzeugt.

Es handelt sich also um ein iteratives Verfahren, bei dem aus der Interaktion des Nutzers mit den Ergebnissen einer Suche gelernt wird. Die durchsuchte Datenbasis enthält Datensätze, denen etwa Produkte zugeordnet sein können. Die Datenbasis kann damit insbesondere einen Katalog von Produkten umfassen. Der Begriff "Produkte" im Sinne der Erfindung bezeichnet dabei Objekte, die dem Nutzer von einem Anbieter angeboten werden, insbesondere Waren und Dienstleistungen. Dies können etwa physische Objekte sein oder auch beispielsweise Dateien, etwa Musik- oder Videodateien, Texte und Bilder oder Webseiten. Unter einem Produkt kann in dieser Schrift des Weiteren auch eine Gruppe von Einzelprodukten mit bestimmten Eigenschaften oder eine Gruppe von Einzelprodukten der gleichen Produktkategorie verstanden werden.

Datensätze, denen Produkte zugeordnet sind, können verschiedene Attribute umfassen, die die jeweiligen Produkte betreffen. Dies können beispielsweise Informationen wie ein Beschreibungstext, Kategorisierung, Produkttyp, Kenndaten, Herstellernamen, Produkteigenschaften und Preise sein.

In einem ersten Schritt wird eine Suche in der Datenbasis durchgeführt, wobei den einzelnen Datensätzen Relevanzdaten zugeordnet werden. Erfindungsgemäß umfasst der Begriff "Relevanzdaten" solche Daten, die Auskunft darüber geben, ob für die Suchanfrage relevante Datensätze gefunden wurden und/oder welche Datensätze relevant sind. Ferner kann die Relevanz von Datensätzen quantitativ bestimmt werden, etwa um die Relevanz verschiedener Datensätze vergleichen zu können. Es werden also nicht notwendigerweise quantitative Relevanzdaten für jeden einzelnen Datensatz ermittelt, sondern es können Relevanzdaten für die Gesamtmenge oder eine Teilmenge der Datensätze bestimmt werden, etwa indem Datensätze zu einer Trefferliste hinzugefügt werden, ohne dabei nach dem Grad der Relevanz zu unterscheiden. Die Relevanzdaten können somit auch eine Trefferliste sein.

Es wird also etwa bestimmt, welche Datensätze für die Suchanfrage relevant sind, zum Beispiel welche Produkte zu der Suchanfrage passen. Die Ausgabe der Suchergebnisse erfolgt anhand der Relevanz, etwa in Form einer Liste. Zum Beispiel kann die Liste, wenn die Relevanzdaten quantitative Informationen über die Relevanz der Datensätze umfassen, nach der Relevanz geordnet sein, indem die Datensätze umso weiter oben angeordnet sind, je relevanter sie für die Suchanfrage sind.

In einem weiteren Schritt wird erfasst, wie der Nutzer mit den Datensätzen interagiert. Die Nutzerinteraktion kann auf vielfältige Arten erfolgen. Beispielsweise kann sich der Nutzer einen Datensatz detailliert ausgeben lassen, indem er etwa eine Verknüpfung auf einer Webseite aufruft. Er kann ferner ein Produkt kaufen, das einem Datensatz zugeordnet ist, es in einer Merkliste speichern oder eine Bewertung vornehmen. Dabei werden die Nutzerinteraktionen mit Bezug zu der Suchanfrage betrachtet. Es werden also Nutzerinteraktionen mit den Datensätzen betrachtet, die dem Nutzer bei der Suche mit dieser Suchanfrage angezeigt wurden. Beispielsweie können einzelnen Interaktionsdaten für die einzelnen Datensätze festgehalten, also etwa gespeichert werden. In diesem Fall kann zu einem Datensatz etwa festgehalten werden, dass der Nutzer mit ihm intergiert hat, etwa durch einen Kauf, nachdem der Datensatz auf eine bestimmte Suchanfrage ausgegeben wurde. Die Interaktionsdaten können auch gesammelt festgehalten werden, etwa als Menge der Datensätze, mit denen der Nutzer nach einer bestimmten Suchanfrage interagiert hat. Bezüge zu anderen Informationen, etwa über den individuellen Nutzer oder über weitere Suchanfragen, können die Suche zusätzlich verbessern.

Aus den erfassten Nutzerinteraktionen werden nun Rückschlüsse darauf gezogen, ob und inwieweit die Ergebnisse der Suche für den Nutzer relevant sind. Wird beispielsweise ein Datensatz als sehr relevant angezeigt und ruft der Nutzer dazu keine weiteren Informationen ab, dann kann dies darauf hindeuten, dass er kein Interesse an diesem Datensatz hat. In einem anderen Beispiel wird ein Produkt als wenig relevant angezeigt, aber dann doch gekauft. Dies lässt darauf schließen, dass die bei der ursprünglichen Suche ermittelte Relevanz verbessert werden sollte.

Zur Optimierung der Relevanzdaten der Datensätze bei der Suche werden nun Korrelationsdaten erzeugt, die Korrelationen zwischen den Attributen der Datensätze und den Nutzerinteraktionen angeben. Wird etwa festgestellt, dass Datensätze mit bestimmten Attributen aufgrund der erfassten Interaktionsdaten eine besonders hohe oder niedrige Relevanz haben, so spiegeln die Korrelationsdaten diese Information wider. Dadurch kann etwa bestimmt werden, welche Attribute die besonders relevanten oder irrelevanten Datensätze gemeinsam haben. Dazu können verschiedene Methoden des Maschinenlernens und der künstlichen Intelligenz verwendet werden, beispielsweise neuronale Netze. Die Korrelationsdaten dienen dazu, die Relevanz von Datensätzen für die Suchanfrage aufgrund der erfassten Interaktionsdaten zutreffender zu bestimmten. Dazu werden die Relevanzdaten der Datensätze erneut erzeugt, wobei die Korrelationsdaten und die Attribute der Datensätze berücksichtigt werden. Wird die Suchanfrage erneut durchgeführt, so können durch die neuen Relevanzdaten für diese Suchanfrage relevantere Ergebnisse gefunden werden.

Die Korrelationsdaten können dabei etwa als Korrelationsmatrix gesammelt festgehalten werden. Sie können aber auch mit Bezug zu den einzelnen Datensätzen festgehalten werden, etwa indem dem Datensatz eines spezifischen Produkts Korrelationsdaten zugeordnet werden, die eine Korrelation zwischen Nutzerinteraktionen mit dem Produkt und Suchanfragen umfassen.

Das erfindungsgemäße Verfahren ist insbesondere vorteilhaft in Anwendungsfällen, in denen nur eine kleine Menge von Interaktionsdaten zur Beurteilung der Relevanz der Datensätze zur Verfügung steht, beispielsweise bei einem jungen Webshop, geringen Nutzerzahlen oder Nischenprodukten. Wenn der Nutzer etwa nur mit einigen Datensätzen interagiert hat, so erlaubt die Verallgemeinerung der daraus gewonnenen Interaktionsdaten durch die Attribute der Datensätze eine genauere Bestimmung der Relevanzdaten auch für andere Datensätze mit ähnlichen Attributen, für die keine oder wenige Interaktionsdaten erfasst wurden.

Bei einer Ausbildung der Erfindung werden beim Bestimmen der Korrelationsdaten Abweichungen zwischen erwarteten und tatsächlichen Interaktionsdaten bestimmt. Dadurch können die Korrelationsdatenen vorteilhafterweise besonders genau bestimmt werden.

Dazu werden zunächst erwartete Interaktionsdaten bestimmt. Es wird beispielsweise eine Verteilung der Interaktionen mit den ausgegebenen Datensätzen erzeugt, bei welcher der Nutzer mit den Suchergebnisse am meisten interagiert, welche die höchste Relevanz haben. Es kann etwa erwartet werden, dass ein relevanteres Produkt häufiger als ein weniger relevantes Produkt gekauft wird. Liefert die Erfassung der tatsächlichen Interaktionsdaten ein abweichendes Ergebnis, so können die Korrelationsdaten derart bestimmt werden, dass die Relevanzdaten entsprechend den Interaktionsdaten korrigiert werden. Dabei werden, wie oben beschrieben, Korrelationen mit den Attributen der Datensätze berücksichtigt. Die erwarteten Interaktionsdaten können dabei zum Beispiel eine Soll-Verteilung definieren, bei der etwa solche Produkte als besonders relevant bewertet werden, mit denen besonders viele Interaktionen erfasst werden.

Die Attribute, die für die Korrelationsdaten berücksichtigt werden, können auf verschiedene Weise bestimmt werden. Zum einen können alle Attribute gemerkt werden, sodass bei jeder Interaktion die Gesamtheit der Attribute des betreffenden Datensatzes betrachtet wird. Ferner können nur solche Attribute gemerkt werden, die in der Datenbasis selten vorkommen. Dazu kann beispielsweise eine Wortgewichtung verwendet werden, um Wörter in Produktbeschreibungen zu identifizieren, die eine zuverlässige Charakterisierung erlauben. Ergänzend dazu kann etwa der Einfluss verschiedener Attribute, etwa bestimmter Wörter, auf die Relevanz gewichtet werden. Ferner können einzelne Attribute oder bestimmte Gruppen von Attributen betrachtet werden. Beispielsweise kann bei einer geeigneten Datenbasis der Name der Kategorie der einzelnen Datensätze als Attribut isoliert berücksichtigt werden. Auch hier kann eine Gewichtung der einzelnen Attribute vorgenommen werden. Zudem können gezielt nur solche Attribute betrachtet werden, die in mehreren Interaktionen vorkommen, um Artefakte zu vermeiden, bei denen der Einfluss einer einzigen oder weniger Interaktionen durch die fehlende statistische Aussagekraft falsch bewertet werden.

In einer Weiterbildung umfasst die Suchanfrage zumindest einen Suchbegriff. Der Nutzer kann dadurch vorteilhafterweise intuitiv eine Suchanfrage formulieren.

Die Suche durch eine Eingabe zumindest eines Suchbegriffs ist dabei dem Nutzer insbesondere für computerbasierte Anwendungen vertraut und es sind an sich bekannte Verfahren verfügbar, durch die eine Datenbasis anhand eines Suchbegriffs durchsucht werden kann. Dabei kann beispielsweise analysiert werden, ob der Suchbegriff in den Attributen der Produkte enthalten ist.

Bei einer Ausbildung umfasst die Suchanfrage eine Auswahl zumindest einer dem Nutzer vorgegebenen Suchoption. Die Suchanfrage kann dadurch in vorteilhafter Weise schnell und einfach erfasst werden.

Als vorgegebene Suchoptionen können etwa Rubriken einer Navigation dienen. Beispielsweise kann der Nutzer auf einer Webseite eine Schaltfläche betätigen und sich Produkte einer bestimmten Kategorie anzeigen lassen. Dieser Aufruf entspricht einer Suchanfrage, wobei dem Nutzer die Suchparameter und Suchbegriffe bereits vorgegeben sind und er diese lediglich aufruft. Es kann auch beispielsweise eine Rubrik "Sonderangebote" verfügbar sein, die über eine Auswahl des Nutzers aufrufbar ist und für die bestimmte Produkte relevant sind. Die Relevanz der Datensätze, die für die jeweilige Suchoption ausgegeben werden, wird dann erfindungsgemäß bestimmt.

Es sind ferner Kombinationen der oben beschriebenen Suche nach Suchbegriffen und vorgegebenen Suchoptionen möglich. Beispielsweise kann der Nutzer mittels eines Suchbegriffs die Datensätze einer bestimmten Kategorie durchsuchen. Die Suchanfrage ist in diesem Fall durch alle Spezifikationen definiert, die vom Nutzer vorgegeben werden.

Bei einer Weiterbildung werden die Relevanzdaten der Datensätze für die Suchanfrage anhand eines Empfehlungsdienstes erzeugt. Dadurch liefert die Suche dem Nutzer vorteilhafterweise besonders relevante Datensätze.

Empfehlungsdienste *(recommendation engines)* sind an sich bekannt und können je nach dem Einsatzgebiet ausgewählt und konfiguriert werden. Es ist für ein optimales Ausführen des erfindungsgemäßen Verfahrens hilfreich, wenn bereits der erste Suchvorgang anhand der Suchanfrage zu möglichst korrekten Relevanzdaten der Datensätze führt und diese dann durch die Erfindung optimiert werden.

Bei einer weiteren Ausbildung werden die Korrelationsdaten ferner anhand von weiteren Interaktionsdaten bestimmt, wobei die weiteren Interaktionsdaten Nutzerinteraktionen mit den Daten-sätzen betreffen, die zu einer weiteren Suchanfrage ausgegeben wurden. Dabei weist die weitere Suchanfrage zumindest ein vorgegebenes Ähnlichkeitsmaß zu der Suchanfrage auf. Dadurch werden vorteilhafterweise Informationen berücksichtigt, die ähnliche Suchanfragen betreffen.

Insbesondere bei der Verwendung freier Suchbegriffe in der Suchanfrage, aber auch bei der Verwendung vorgegebener Suchoptionen, können mehrere Suchanfragen zueinander ähnlich sein, obwohl sie nicht identisch sind. Beispielsweise können mehrere Suchbegriffe in verschiedener Reihenfolge eingegeben werden, es können Schreibfehler auftreten oder mehrere Suchanfragen können sich durch geringe Abweichungen unterscheiden. Dies wird durch ein Ähnlichkeitsmaß quantifiziert, das insbesondere eine semantische Ähnlichkeit zweier Suchanfragen bestimmt. Ferner können ähnliche Begriffe beispielsweise bestimmt werden über einen Thesaurus, ein Übersetzungswörterbuch, ein Wortstammverfahren wie Stemming oder Lemmatizing, über eine phonetische Ähnlichkeit, über ein Ähnlichkeitsverfahren wie die Levenshtein-Distanz oder über ein Verfahren, wie es in der EP 2 035 965 B1 beschrieben ist. Bei der Bestimmung der Korrelationsdaten werden also auch Interaktionsdaten berücksichtigt, die im Zusammenhang mit ähnlichen Suchanfragen erfasst wurden. Insbesondere können dabei die Daten von ähnlichen Suchanfragen in Abhängigkeit von dem Ähnlichkeitsmaß gewichtet werden.

Insbesondere erlaubt dies, für Suchanfragen, bei denen wenige oder keine Interaktionsdaten vorliegen, möglichst zutreffende Relevanzdaten zu erzeugen. Dies ist etwa bei Schreibfehlern von Bedeutung, die selten vorkommen und für die daher wenige Interaktionsdaten generiert werden. Da falsch und richtig geschriebene Wörter jedoch typischerweise einander ähnlich sind, weisen sie ein hohes Ähnlichkeitsmaß auf. Es können dadurch die jeweiligen Interaktionsdaten zur Erzeugung der Korrelationsdaten herangezogen werden und die statistische Sicherheit durch eine größere Datenmenge verbessern.

Umgekehrt können auch Interaktionsdaten, die für Nutzerinteraktionen mit beispielsweise falsch geschriebenen Wörtern erfasst wurden, auch für Suchanfragen mit dem richtig geschriebenen Wort berücksichtigt werden. Insbesondere führen dadurch häufige Falschschreibungen, etwa die Wörter "Standard" und "Standart", nicht dazu, dass die jeweiligen Korrelationsdaten auf der Grundlage einer verkleinerten Menge von Interaktionsdaten bestimmt werden. In beiden Fällen wird also die Relevanz der Datensätze genauer bestimmt.

Bei einer Ausbildung sind die Datensätze der Teilmengen bei der Ausgabe nach einer Rangfolge angeordnet, die von den Relevanzdaten abhängt. Der Nutzer erhält damit vorteilhafterweise eine Ausgabe der Datensätze, aus der er die Relevanz der einzelnen Suchergebnisse ablesen kann.

Beispielsweise werden die Datensätze als Liste ausgegeben und dabei umso weiter vorne in der Rangfolge angezeigt, je relevanter sie sind. Zusätzlich oder alternativ zur Anordnung der angegebenen Datensätze können beispielsweise auch Hervorhebungen verwendet werden. Datensätze, die einen hohen Rang haben, können etwa besonders hervorgehoben dargestellt werden. Indem die Relevanzdaten von den Interaktionsdaten abhängig gebildet werden, kann auch die Rangfolge entsprechend den Interaktionsdaten angepasst werden. Insbesondere hängt also die Sortierung der Suchergebnisse bei der Ausgabe von den erfassten Interaktionsdaten ab.

Ferner können die Suchergebnisse nach anderen Kriterien sortiert werden, beispielsweise anhand eines zugeordneten Preises. Dies erlaubt insbesondere dann eine Sortierung, wenn die Relevanz der einzelnen Datensätze nicht quantifiziert wurde, sondern die Relevanzdaten nur Informationen darüber umfassen, ob ein Datensatz relevant ist oder nicht, d.h. insbesondere ob er zu der Trefferliste gehört. Allerdings kann die Sortierung auch dann nach anderen Kriterien erfolgen, wenn quantitative Relevanzdaten für die Datensätze ermittelt wurden.

Bei einer Ausbildung umfassen die Nutzerinteraktionen einen Aufruf von Informationen zu den Datensätzen und/oder ein Vormerken und/oder einen Kaufvorgang von Produkten, die den Datensätzen zugeordnet sind. Dies erlaubt vorteilhafterweise die besonders genaue Bestimmung der Relevanz einzelner Datensätze, insbesondere in Webshops oder in vergleichbaren Anwendungsbereichen.

Beispielsweise können bei einer Suchanfrage auf einer Website mehrere Ergebnisse in einer Liste dargestellt werden. Der Nutzer kann durch Auswahl eines der Suchergebnisse, beispielsweise durch einen Klick auf einen Produktnamen, weitere Informationen zu dem Datensatz abrufen. Eine solche Auswahl wird erfasst. Es werden dann detailliertere Informationen zu dem Produkt ausgegeben. Ferner kann der Nutzer einen Datensatz, insbesondere ein Produkt, in einer Merkliste speichern. Außerdem kann der Nutzer ein Produkt kaufen, das einem der Datensätze zugeordnet ist. Die verschiedenen Interaktionsarten können dabei mit den Interaktionsdaten gespeichert werden. Insbesondere können Details der einzelnen Interaktionen, beispielsweise der Zeitpunkt einer Interaktion oder die Dauer einer Interaktion, gespeichert werden.

Bei einer Weiterbildung werden beim Bestimmen der Korrelationsdaten die Interaktionsdaten nach der Art der Nutzerinteraktionen gewichtet. Dadurch wird vorteilhafterweise die unterschiedliche Aussagekraft verschiedener Interaktionsarten in die Bestimmung der Korrelationsdaten einbezogen.

Beispielsweise kann differenziert werden, wie stark das Interesse eines Nutzers an einem Datensatz, insbesondere einem Produkt, ausgeprägt ist. Beispielsweise kann der Kauf eines Produktes höher gewichtet werden als das Vormerken des Produkts, das wiederum höher gewertet wird als das Abrufen von Informationen zu dem Produkt. Die Bestimmung der Relevanzdaten wird dadurch weiter verbessert.

Bei einer Ausbildung werden beim Bestimmen der Korrelationsdaten die Nutzerinteraktionen anhand ihrer Häufigkeit gewichtet. Dadurch werden vorteilhafterweise die Korrelationsdaten besonders zuverlässig bestimmt.

Dabei wird berücksichtigt, dass typischerweise die Häufigkeit bestimmter Nutzerinteraktionen als Maß für die Relevanz eines Datensatzes angesehen wird. Beispielsweise werden bei einem Webshop solche Datensätze als besonders relevant angesehen, die Produkten zugeordnet sind, die besonders häufig bei dieser Suchanfrage gekauftet werden. In einem anderen Beispiel kann in einer Datenbank einer Bibliothek ein besonders häufig aufgerufener Datensatz als besonders relevant für die zugehörige Suchanfrage gelten.

Umgekehrt kann auch eine geringe Relevanz anhand von Häufigkeiten bestimmt werden, zum Beispiel wenn zu einem Produkt besonders häufig Informationen abgerufen werden, ohne dass die zu einem Kauf führt.

Bei einer Weiterbildung des erfindungsgemäßen Verfahrens umfassen die Attribute Fließtexte, numerische Angaben und/oder definierte Ausprägungen von den Datensätzen zugeordneten Produkten. Dadurch erlauben die Attribute vorteilhafterweise eine umfassende Beschreibung der Produkte.

Zur Beschreibung beispielsweise eines Produkts kann ein Fließtext bereitgestellt werden. Dieser kann etwa einen Produktnamen, eine Kurzbeschreibung, einen Werbetext, einen Buchtitel, einen Autor oder andere Informationen beinhalten. Es können ferner weitere Erläuterungen zu dem Produkt angegeben werden, beispielsweise für Wein das Attribut "geeignet für welche Speisen", das eine Auflistung in Form eines Fließtextes enthalten kann. Im Zweifel muss ein Attribut als Fließtext eingeordnet werden. Dies erfordert Prüf- und Normalisierungsroutinen für diese Attribute, damit der Fließtext durch einen Computer interpretiert und verarbeitet werden kann. Insbesondere müssen dem Fließtext Informationen entnommen werden, die einen Vergleich zwischen mehreren Produkten und die Bestimmung der Korrelationsdaten anhand der Attribute ermöglichen. Alternativ können aus einem Fließtext Worte herausgesucht werden. Die Worte werden dann gewichtet. Dies ist eine einfachere Analyse des Fließtextes als die bereits erwähnten Prüf- und Normalisierungsroutinen.

Numerische Angaben sind durch eine Zahl darstellbar. Dies können beispielsweise Preis, Akkulaufzeit, Zoombereich, Erscheinungsdatum, Leistungsaufnahme, Volumen oder andere Daten sein.

Bei Attributen mit definierten Ausprägungen sind die jeweiligen Werte des Attributs einer Liste entnommen. Dies erlaubt eine besonders einfache Kategorisierung von Produkten. Beispielsweise können Listen mit Ausprägungen bereitgestellt werden, die die Farbe, Größe, den Hersteller, die Produktkategorie, Auflösung, Energieeffizienzklasse, Lampenfassung oder ähnliches umfassen. Zu beachten ist hierbei, dass die Ausprägungen häufig in einer Datenbasis vielfach vorkommen, etwa eine Farbe, die vielen Produkten zugeordnet ist.

Die einzelnen Attribute können auch leer sein, es kann also auch kein Wert zugewiesen sein.

Bei einer Weiterbildung wird in Verbindung mit den Nutzerinteraktionen eine Nutzeridentifikation durchgeführt, und die Suche wird danach anhand der Daten zu dem Nutzer durchgeführt. Dadurch könnten vorteilhafterweise Informationen über den jeweiligen Nutzer für die Suche verwendet werden.

Die Identifikation eines Nutzers erfolgt dabei nach an sich bekannten Verfahren. Beispielsweise kann sich ein Nutzer in einem Webshop einloggen. Zur Suche kann dann beispielsweise eine Liste der Produkte verwendet werden, die der Nutzer gekauft hat, die er vorgemerkt hat oder zu denen er zu einem früheren Zeitpunkt Informationen abgerufen hat. Dabei können die Interaktionen verschiedener Nutzer verschieden gewichtet werden. Es kann beispielsweise eine Interaktion, etwa ein Kauf, eines Nutzers stärker oder schwächer berücksichtigt werden als bei anderen Nutzern. Die Gewichtung der Interaktionen kann anhand von Informationen über den jeweils interagierenden Nutzer erfolgen. Dadurch kann etwa die Relevanz der Datensätze für verschiedene Nutzergruppen besser bestimmt werden, zum Beispiel um solche Suchergebnisse auszugeben, die für den aktuellen Nutzer besonders relevant sind.

Das erfindungsgemäße Computerprogramm umfasst einen Programmcode zur Durchführung des erfindungsgemäßen Verfahrens, wenn der Programmcode von einem Computer ausgeführt wird. Das erfindungsgemäße Computerprogramm ist insbesondere ausgebildet, das vorstehend beschriebene erfindungsgemäße Verfahren zu implementieren. Das Computerprogramm weist somit dieselben Vorteile auf wie das erfindungsgemäße Verfahren.

Die erfindungsgemäße Suchmaschine der oben genannten Art ist dadurch gekennzeichnet, dass durch die Erfassungsschnittstelle ferner Interaktionsdaten über Nutzerinteraktionen mit den Datensätzen, die zu der Suchanfrage ausgegeben wurden, erfassbar sind. Anschließend ist durch die Relevanzbestimmungseinheit ferner Korrelationsdaten bestimmbar, welche die Korrelation zwischen den einzelnen Attributen und den Interaktionsdaten für die Suchanfrage angeben. Schließlich sind die Relevanzdaten der Datensätze für die Suchanfrage unter Einbeziehung der Korrelationsdaten und der Attribute der Datensätze erneut erzeugbar.

Die erfindungsgemäße Suchmaschine ist insbesondere ausgebildet, das vorstehend beschriebene erfindungsgemäße Verfahren zu implementieren und das erfindungsgemäße Computerprogramm auszuführen. Es weist somit dieselben Vorteile auf wie das erfindungsgemäße Verfahren.

Bei einer Weiterbildung ist bei den durch die Erfassungsschnittstelle erfassbaren Nutzerinteraktionen eine räumliche Nähe zwischen einem Nutzer und Produkten, die den Datensätzen zugeordnet sind, erfassbar. So können vorteilhafterweise physische Nutzerinteraktionen mit Produkten erfasst und mit den Datensätzen in Verbindung gebracht werden, etwa in einem Ladengeschäft oder Ausstellungsräumen.

Beispielsweise kann die Position des Nutzers erfasst werden, etwa mittels einer Kamera oder eines Trackingsystems, das den Nutzer lokalisiert. Beispielsweise kann das Tracking über ein Mobiltelefon oder ein anderes mobiles Gerät des Nutzers erfolgen. Auf diese Weise kann etwa festgestellt werden, ob sich der Nutzer in der Nähe des Produkts, beispielsweise vor einem bestimmten Regal, befindet.

Auch Nutzerinteraktionen über die bloße Detektion der räumlichen Nähe hinaus können erfasst werden, etwa wenn der Nutzer ein Produkt aus einem Regal nimmt oder es in einen Einkaufwagen legt. Zudem kann etwa ein Erfassungssystem detektieren, dass der Nutzer ein Produkt gezielt betrachtet. Ferner kann indirekt auf die räumliche Nähe und eine physische Interaktion geschlossen werden, etwa wenn der Nutzer ein Produkt an einer Kasseneinrichtung bezahlt. Ferner kann erfasst werden, wenn ein Nutzer ein Produkt kauft und später zurückgibt oder umtauscht.

Dabei kann der Nutzer etwa durch Login-Daten eines Nutzergeräts, während eines bargeldlosen Bezahlvorgangs oder durch eine Kundenkarte identifiziert werden. Dadurch kann eine Nutzerinteraktion einem bestimmten Nutzer zugeordnet werden, der zuvor eine Suche mit einer bestimmten Suchanfrage durchgeführt hat. Die Nutzerinteraktionen können so leichter der vorher durchgeführten Suchanfrage und den dabei ausgegebenen Datensätzen zugeordnet werden.

Bei einer Weiterbildung werden bei den Nutzerinteraktionen Signale zwischen den Produkten und einem dem Nutzer zugeordneten Gerät mittels zumindest eines Transponders übertragen. Dies ermöglicht in vorteilhafter Weise die Detektion einer physischen Interaktion durch den Nutzer. Dabei können funktechnische Systeme mit begrenzter Reichweite detektieren, ob sich der Nutzer in räumlicher Nähe zu Produkten befindet. Insbesondere können Signale beispielsweise durch RFID *("radio frequency identification")* oder NFC *("near field communication")* übertragen werden.

Beispielsweise kann ein Produkt, insbesondere an seiner Verpackung, einen Transponder umfassen, von dem etwa das Mobiltelefon des Nutzers Signale auslesen und das Produkt identifizieren kann. Umgekehrt kann die Position des Nutzers anhand eines Transponders, beispielsweise in seiner Kundenkarte oder an seinem Einkaufswagen, erfasst werden. Ferner können sowohl das Produkt als auch der Nutzer anhand von Transpondern identifiziert werden, beispielsweise durch eine geeignete Leseeinrichtung an einer bestimmten Position in einem Ausstellungsraum, an einem Einkaufswagen oder an einer Kasseneinrichtung. Die Merkmale der so erfassten Nutzerinteraktion können etwa die Identifikation des Produkts, das übertragene Signal sowie den Zeitpunkt und den Ort der Übertragung umfassen.

Insbesondere kann die Gesamtheit der erfassten Nutzerinteraktionen sowohl physische als auch virtuelle Interaktionen umfassen. Beispielsweise kann sowohl das Verhalten des Nutzers auf einer Webseite als auch das Verhalten des Nutzers in einem Ladengeschäft dazu verwendet werden, die Relevanzdaten der Produkte zu bestimmen oder zu verändern. Beispielsweise kann die Relevanz von Datensätzen, die auf der Webseite auf eine Suchanfrage hin ausgegeben werden, davon abhängen, wie oft die den Datensätzen zugeordneten Produkte dann von den Nutzern im Ladengeschäft gekauft werden. Dadurch kann vorteilhafterweise für den Nutzer die Relevanz der Produkte genauer bestimmt werden

In einer Ausbildung der erfindungsgemäßen Suchmaschine umfassen die durch die Erfassungsschnittstelle erfassbaren Nutzerinteraktionen einen Aufruf von Informationen zu den Datensätzen und/oder ein Vormerken und/oder einen Kaufvorgang von Produkten, die den Datensätzen zugeordnet sind. Dadurch kann vorteilhafterweise erfasst werden, mit welchen Produkten der Nutzer in besonders aussagekräftiger Art interagiert hat.

Die Erfindung wird nun anhand von Ausführungsbeispielen mit Bezug zu den Zeichnungen erläutert.
Figur 1 zeigt ein Ausführungsbeispiel der erfindungsgemäßen Suchmaschine,
Figur 2 zeigt ein Ausführungsbeispiel des erfindungsgemäßen Verfahrens und
Figur 3 zeigt die Bestimmung von Abweichungen zwischen erwarteten und tatsächlichen Interaktionsdaten.

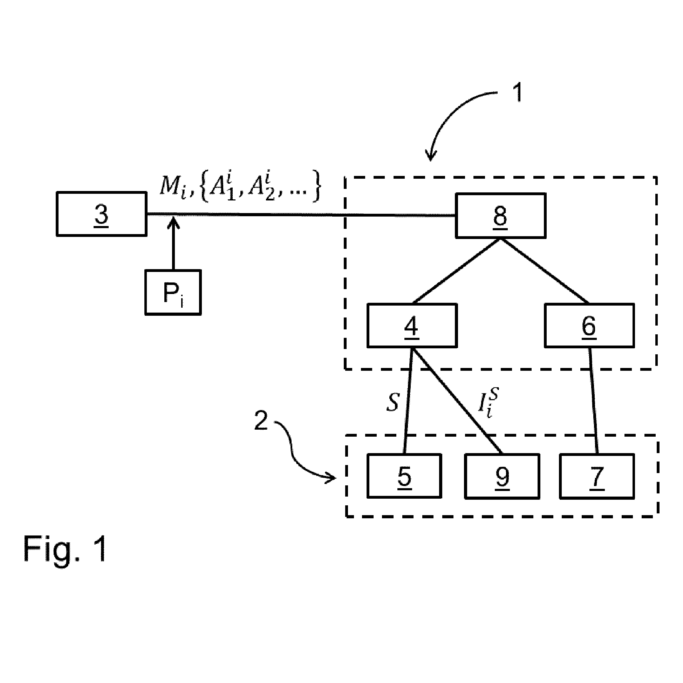

Mit Bezug zu Figur 1 wird ein Ausführungsbeispiel der erfindungsgemäßen Suchmaschine erläutert.

Zur Implementierung des Ausführungsbeispiels wird das erfindungsgemäße Computerprogramm verwendet und auf einem Computer ausgeführt, der die Suchmaschine 1 umfasst. Die Suchmaschine 1 umfasst eine Relevanzbestimmungseinheit 8, die datentechnisch mit einer Erfassungsschnittstelle 4 und einer Ausgabeeinheit 6 gekoppelt ist. Die Relevanzbestimmungseinheit 8 ist ferner datentechnisch mit einer Datenspeichereinheit 3 gekoppelt. Auf der Datenspeichereinheit 3 ist eine Datenbasis mit Datensätzen Mᵢ gespeichert, die einzelnen Produkten Pᵢ zugeordnet sind. Dabei umfassen die Datensätze Mᵢ Attribute A¹ᵢ bis Aⁿ_{i,} die etwa Eigenschaften des jeweiligen Produkts Pᵢ beschreiben. Die Suchmaschine 1 kann auf die Daten der Datenbasis zugreifen und sie durchsuchen.

Die Suchmaschine 1 ist ferner datentechnisch mit dem Nutzergerät 2 gekoppelt. Obwohl in Figur 1 lediglich ein einzelnes Nutzergerät 2 gezeigt ist, kann eine Vielzahl von Nutzergeräten 2 mit der Suchmaschine 1 gekoppelt sein. Das einzelne Nutzergerät 2 umfasst eine Eingabeeinheit 5 und eine Interaktionserfassungseinheit 9, die mit der Erfassungsschnittstelle 4 der Suchmaschine 1 gekoppelt sind. Das Nutzergerät 2 umfasst ferner eine Anzeigeeinheit 7, die mit der Ausgabeeinheit 6 gekoppelt ist. Die datentechnische Kopplung erfolgt insbesondere über ein Computernetzwerk wie das Internet oder ein lokales Netzwerk. Das Nutzergerät 2 ist im dargestellten Fall ein Personalcomputer, es kann sich aber um beliebige geeignete Geräte handeln, etwa ein Mobiltelefon.

Die Erfassungseinheit 5 erfasst eine Suchanfrage S von einem Nutzers, etwa indem dieser mithilfe einer Tastatur einen Suchbegriff in ein Eingabefeld auf einer Webseite eingibt. Die Suchanfrage S wird an die Erfassungsschnittstelle 4 der Suchmaschine 1 übertragen. Die Suchmaschine 1 führt eine Suche aus und über die Ausgabeeinheit 6 wird eine Ausgabe von Suchergebnissen an die Anzeigeeinheit 7 des Nutzergeräts 2 übertragen und dem Nutzer angezeigt. Die Suchergebnisse sind dabei eine Liste von Datensätzen Mᵢ, die nach der ermittelten Relevanz für die Suchanfrage S geordnet auf einer Webseite angezeigt werden.

Der Nutzer kann nun mit den Suchergebnissen interagieren, etwa indem er mithilfe einer Maus oder eines Touchscreens einzelne Ergebnisse auswählt, Detailinformationen aufruft, ein Suchergebnis in einer Merkliste speichert oder ein Produkt Pᵢ kauft. Diese Interaktionen werden durch die Interaktionserfassungseinheit 9 des Nutzergeräts 2 als Interaktionsdaten I^{S}ᵢ erfasst und über die Erfassungsschnittstelle 4 an die Suchmaschine 1 übertragen.

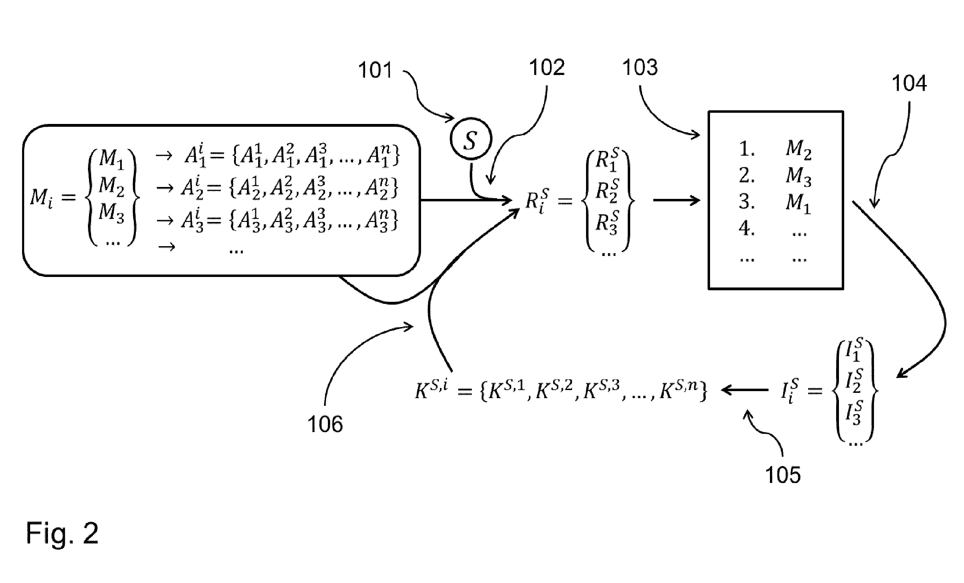

Mit Bezug zu Figur 2 wird ein Ausführungsbeispiel des erfindungsgemäßen Verfahrens erläutert.

Das Verfahren wird durch die vorstehend mit Bezug zu Figur 1 beschriebene Suchmaschine 1 ausgeführt, wobei das erfindungsgemäße Computerprogramm verwendet wird. In einem ersten Schritt 101 wird eine Suchanfrage S eines Nutzers erfasst. Anhand der Suchanfrage S wird eine Datenbasis mit Datensätzen Mᵢ durchsucht, wobei den Datensätzen Mᵢ Attribute A¹ᵢ bis Aⁿᵢ zugeordnet sind. Zur Durchführung der Suche wird in diesem Ausführungsbeispiel eine Keyword-Suche nach an sich bekannten Suchverfahren verwendet. Es können aber alle geeigneten Suchverfahren angewandt werden, beispielsweise kann bei einem anderen Ausführungsbeispiel ein Empfehlungsdienst verwendet werden.

Die Suchanfrage S umfasst etwa einen Suchbegriff, im dargestellten Beispiel den Suchbegriff "elegant". Der Nutzer kann diesen Begriff selbst wählen, etwa indem er ein Wort in eine Suchmaske auf einer Webseite eingibt. Die Suchanfrage kann aber auch eine dem Nutzer vorgegebene Suchoption umfassen. Zum Beispiel kann der Nutzer bei einer Navigationsfunktion eine Kategorie wählen, wobei die Suchanfrage in diesem Fall der Angabe der Kategorie entspricht. Ferner kann etwa ein Link vorgesehen sein, den der Nutzer auswählen kann und durch den nach saisonalen Angeboten oder Sonderangeboten gesucht wird. Mehrere der genannten Arten von Suchanfragen können auch kombiniert werden, etwa indem der Nutzer mit einem Suchbegriff in einer bestimmten Kategorie nach saisonalen Angeboten sucht.

Den Datensätzen Mᵢ sind einzelne Produkte zugeordnet. Ein Datensatz umfasst eine Reihe von Attributen A¹ᵢ bis Aⁿᵢ, die etwa den Feldern einer Tabelle von Produkteigenschaften entsprechen. Die Ausprägungen der Attribute A¹ᵢ bis Aⁿᵢ liegen dabei in verschiedener Form vor. Sie enthalten insbesondere Fließtext oder numerische Angaben, ferner enthalten sie definierte Ausprägungen, das heißt, einzelne Ausprägungen sind einer definierten Liste entnommen, z.B. einer Reihe von Produktkategorien in einem Sortiment oder von vordefinierten Farbbezeichnungen.

Die folgende Tabelle I gibt ein Beispiel einer Datenbasis mit Datensätzen Mᵢ und ihren Attributen A¹ᵢ bis Aⁿᵢ wieder:

**Tabelle I**

| Mᵢ | A¹ᵢ | A²ᵢ | A³ᵢ | A⁴ᵢ |
|---|---|---|---|---|
| Datensätze | Identifikationsnummer | Beschreibungstext | Leistungsaufnahme (W) | Volumen (I) |
| M₁ | ID1 | "elegant geformter Staubsauger" | 900 | - |
| M₂ | ID2 | "Staubsauger ohne Beutel" | 750 | - |
| M₃ | ID3 | "Beutel f. Staubsauger, elegantes Grau" | - | 2 |
| M₄ | ID4 | "Beutel f. Staubsauger, grün" | - | 3 |
| M₅ | ID5 | "eleganter Hochzeitsanzug" | - | - |
| M₆ | ID6 | "elegantes Hochzeitskleid" | - | - |
| M₇ | ID7 | "Hochzeitsschuhe, schwarz" | - | - |
| M₈ | ID8 | "Hochzeitsschuhe, elegante Form" | - | - |

In einem zweiten Schritt 102 werden den Datensätzen Mᵢ Relevanzdaten R^{S}ᵢ für die erfasste Suchanfrage S zugeordnet und es werden in einem Ausgabeschritt 103 Datensätze Mᵢ ausgegeben. Dieses Vorgehen entspricht etwa dem einer an sich bekannten Suchmaschine. Zum Beispiel wird ein Suchbegriff in den Beschreibungstexten der einzelnen Datensätze Mᵢ identifiziert. Die Ausgabe 103 erfolgt in diesem Ausführungsbeispiel als Liste, deren Rangfolge von den Relevanzdaten R^{S}ᵢ abhängt. Je höher die Relevanz ist, die für einen Datensatz Mᵢ bestimmt wurde, desto weiter oben in der Liste wird der Datensatz Mᵢ angezeigt. Insbesondere wird nur die Teilmenge der Datensätze Mᵢ angezeigt, für welche die höchste Relevanz bestimmt wurde. Es können aber auch alle Datensätze Mᵢ angezeigt werden oder die Ausgabe 103 kann eine anders bestimmte Teilmenge der Datensätze Mᵢ umfassen, etwa nur vorrätige Produkte.

Das folgende Schema der Tabelle II veranschaulicht für das Ausführungsbeispiel die Zuordnung 102 der Relevanzdaten R^{S}ᵢ und den Ausgabeschritt 103, bei dem die Datensätze Mᵢ als Liste angezeigt werden. Bei den Relevanzdaten R^{S}ᵢ steht in dieser vereinfachten Darstellung ein niedrigerer Wert für eine höhere Relevanz des zugeordneten Datensatzes Mᵢ und damit einen höheren Rang in der Liste

**Tabelle II**

| Mᵢ | | R^{S}ᵢ | | |
|---|---|---|---|---|
| Datensätze | | Relevanzdaten | | |
| M₁ | Suche (S) "elegant" | 1 | Ausgabe: | 1. "elegant geformter Staubsauger" |
| | | | → | 2. "elegantes Hochzeitskleid" |
| | | | | 3. "eleganter Hochzeitsanzug" |
| M₂ | → | 6 | | 4. "Beutel f. Staubsauger, elegantes Grau" |
| M₃ | | 4 | | 5. "Hochzeitsschuhe, elegante Form" |
| M₄ | | 7 | | 6. "Staubsauger ohne Beutel" |
| M₅ | | 3 | | 7. "Staubsaugerbeutel, grün" |
| M₆ | | 2 | | 8. "Hochzeitsschuhe, schwarz" |
| M₇ | | 8 | | |
| M₈ | | 5 | | |

Bei diesem Beispiel wurden solche Datensätze Mᵢ mit hoher Relevanz bewertet, deren Beschreibungstext den Suchbegriff "elegant" enthält. Ferner wurde in dem Beispiel berücksichtigt, an welcher Stelle im Beschreibungstext das Wort "elegant" (oder eine Abwandlung davon) steht, wobei solche Einträge als umso relevanter bewertet wurden, je weiter vorne das Wort gefunden wird. Bei gängigen Suchverfahren werden häufig nicht alle Datensätze ausgegeben, sondern nur eine Teilmenge, etwa die besten vier Ergebnisse. Zur besseren Veranschaulichung wurde hier allerdings eine Ausgabe mit allen Datensätzen Mᵢ gewählt.

Im Anschluss an den Ausgabeschritt 103 kann der Nutzer mit den angezeigten Datensätzen Mᵢ interagieren, beispielsweise indem er Details zu einem der ausgegebenen Datensätze aufruft. In einem Schritt 104 werden Interaktionsdaten I^{S}ᵢ erfasst, die diese Nutzerinteraktionen betreffen. Die Interaktionsdaten I^{S}ᵢ beziehen sich dabei insbesondere auf Nutzerinteraktionen mit genau den Datensätzen Mᵢ, die auf die Suchanfrage S hin ausgegeben wurden. Eine Nutzerinteraktion ist dabei eine bestimmte Wechselwirkung zwischen dem Nutzer und einer technischen Einrichtung, über welche der Nutzer mit der Datenbasis interagieren kann.

In dem Beispiel werden die Datensätze Mᵢ als eine Liste von Verknüpfungen auf einer Webseite ausgegeben. Wählt der Nutzer eine Verknüpfung aus, so werden weitere Informationen zu dem jeweils zugeordneten Produkt aufgerufen. Beispielsweise wird eine Webseite mit einer Produktbeschreibung, einem Bild und weiteren Informationen angezeigt. Der Nutzer kann ferner das Produkt vormerken, indem er es in einer Merkliste speichert. Er kann das Produkt auch kaufen. Auch über die genannten Beispiele für Arten der Nutzerinteraktion hinaus können jegliche Interaktionen des Nutzers mit den ausgegebenen Datensätzen Mᵢ als Interaktionsdaten I^{S}ᵢ erfasst werden. Dazu zählt insbesondere auch, ob der Nutzer einen Datensatz Mᵢ ignoriert und also nicht mit ihm interagiert.

Das nachfolgende Schema der Tabelle III stellt die Erfassung der Interaktionsdaten I^{S}ᵢ in dem Ausführungsbeispiel dar. Der Nutzer interagiert hier mit den angezeigten Ergebnissen, indem er auf einen Eintrag der ausgegebenen Liste klickt und damit Informationen zu dem jeweiligen Datensatz Mᵢ aufruft oder indem er ein Produkt kauft. Als Interaktionsdaten I^{S}ᵢ werden die Werte 0 (keine Interaktionen) und 1 (es wurden Interaktionen vorgenommen) erfasst. Es wird hier also die Häufigkeit der Nutzerinteraktionen vereinfacht dargestellt. Beispielsweise klicken die Nutzer nach einer Suche mit dem Suchbegriff "elegant" nur den Hochzeitsanzug M₅ und das Hochzeitskleid M₆ an:

**Tabelle III**

| Mᵢ | | I^{S}ᵢ |
|---|---|---|
| Datensätze | | Interaktionsdaten |
| M₁ | Interaktionsdaten (ja/nein = 1/0) | 0 |
| M₂ | | 0 |
| M₃ | → | 0 |
| M₄ | | 0 |
| M₅ | | 1 |
| M₆ | | 1 |
| M₇ | | 0 |
| M₈ | | 0 |

Die Interaktionsdaten I^{S}ᵢ werden insbesondere zu Nutzerinteraktionen einer Vielzahl von Nutzern erfasst. In jedem dieser Fälle interagiert der jeweilige Nutzer jedoch mit Datensätzen Mᵢ aus einer Liste, die ihm auf die gleiche Suchanfrage S ausgegeben wurde. Die Interaktionsdaten I^{S}ᵢ beziehen sich also stets auf die Suchanfrage S.

Nun werden in einem weiteren Schritt 105 Korrelationsdaten K^{S,1} bis K^{S,n} bestimmt, die für die Suchanfrage S Korrelationen zwischen den einzelnen Attributen A¹ᵢ bis Aⁿᵢ und den Interaktionsdaten I^{S}ᵢ angeben. Insbesondere wird in diesem Schritt bestimmt, ob bestimmte Ausprägungen der Attribute A¹ᵢ bis Aⁿᵢ positiv oder negativ mit den Interaktionsdaten I^{S}ᵢ korreliert sind.

Bei der Bewertung der Interaktionsdaten I^{S}ᵢ kann beispielsweise die Häufigkeit der Nutzerinteraktionen als wesentliches Merkmal betrachtet werden. In diesem Fall kann eine Gewichtung der Interaktionsdaten I^{S}ᵢ so vorgenommen werden, dass Datensätze Mᵢ, mit denen eine große Interaktionshäufigkeit erfasst wurde, als relevanter bewertet werden. Umgekehrt deutet eine niedrige Interaktionshäufigkeit auf geringe Relevanz hin. Ferner kann eine Gewichtung nach Art der Nutzerinteraktion vorgenommen werden. Zum Beispiel können die Käufe eines Produkts die Relevanz des zugeordneten Datensatzes Mᵢ stärker beeinflussen als das bloße Aufrufen von Informationen.

Es wird auf diese Weise betrachtet, welchen Einfluss die einzelnen Attribute A¹ᵢ bis Aⁿᵢ auf die Interaktionsdaten I^{S}ᵢ haben und es werden Korrelationsdaten K^{S,1} bis K^{S,n} bestimmt, die etwa im vorliegenden Beispiel aussagen: "Bei der Suchanfrage ,*elegant*' ist das Wort *,Hochzeit'* im Attribut A² (Beschreibung) positiv mit der Klickwahrscheinlichkeit korreliert; bei den Feldern A³ (Leistungsaufnahme) und A⁴ (Volumen) ist ein leerer Eintrag positiv mit der Klickwahrscheinlichkeit korreliert." Diese Korrelationsdaten K^{S,1} bis K^{S,n} werden im vorliegenden Fall als Matrix gespeichert.

Da die Klickwahrscheinlichkeit als Maß für die Relevanz der Datensätze Mᵢ für die Suchanfrage S betrachtet wird, können die Relevanzdaten R^{S}ᵢ der Datensätze Mᵢ nun so bestimmt werden, dass sie den tatsächlich erfassten Interaktionsdaten I^{S}ᵢ besser entsprechen. Es werden dazu in einem weiteren Schritt 106 unter Einbeziehung der Korrelationsdaten K^{S,1} bis K^{S,n} erneut Relevanzdaten R^{S}ᵢ für die Datensätze Mᵢ erzeugt. Die neuen Relevanzdaten R^{S}ᵢ - und damit die neue Rangfolge in der ausgegebenen Liste - werden anhand der Attribute A¹ᵢ bis Aⁿᵢ der Datensätze Mᵢ und unter Einbeziehung der Korrelationsdaten K^{S,1} bis K^{S,n} bestimmt.

Wird nun in dem Ausführungsbeispiel eine neue Suche mit dem Suchbegriff "elegant" durchgeführt, so ergibt sich die nachfolgend in Tabelle IV aufgeführte Liste von Suchergebnissen:

**Tabelle IV**

| Mᵢ | | (neue) R^{S}ᵢ | | |
|---|---|---|---|---|
| Datensätze | | Relevanzdaten | | |
| M₁ | Suche (S) "elegant" | 5 | Ausgabe: | 1. "eleganter Hochzeitsanzug" |
| M₂ | | 8 | → | 2. "elegantes Hochzeitskleid" |
| M₃ | → | 6 | | 3. "Hochzeitsschuhe, elegante Form" |
| M₄ | | 7 | | 4. "Hochzeitsschuhe, schwarz" |
| M₅ | | 1 | | 5. "elegant geformter Staubsauger" |
| M₆ | | 2 | | 6. "Beutel f. Staubsauger,elegantes Grau" |
| M₇ | | 4 | | 7. "Staubsaugerbeutel, grün" |
| M₈ | | 3 | | 8. "Staubsauger ohne Beutel" |

In diesem Fall rücken die "Hochzeitsschuhe, elegante Form", die vorher weiter hinten aufgelistet wurden, weiter nach vorne, obwohl keine Interaktion mit diesem Produkt auf diese Suchanfrage erfolgte. Dies geschieht, weil das Wort "Hochzeit" im Beschreibungstext gefunden wurde und die Felder "Leistungsaufnahme" und "Volumen" leer sind, was positiv mit der Klickwahrscheinlichkeit korreliert ist. Ferner rückt das Produkt "Hochzeitsschuhe, schwarz" nach oben, obwohl es das Wort "elegant" nicht enthält und daher ursprünglich als wenig relevant bewertet wurde. Datensätze können also mit höherer Relevanz bewertet werden, ohne dass dafür Interaktionen mit genau diesen Datensätzen nötig sind. Es genügt, dass Nutzerinteraktionen mit anderen Produkten erfasst wurden, die ähnliche Attribute haben. Diese Interaktionen werden dann verallgemeinert.

In einem weiteren Ausführungsbeispiel durchsucht der Nutzer die im obigen Beispiel dargestellte Datenbasis mit den Datensätzen Mᵢ anhand einer neuen Suchanfrage S mit dem Suchbegriff "Beutel". Bei der Suche wird etwa das Produkt "Staubsauger ohne Beutel" (M₂) vor den eigentlichen Beuteln angezeigt, weil der Suchbegriff im Beschreibungstext enthalten ist. Werden im Anschluss an die Suche vermehrt Interaktionen mit dem Produkt "Beutel f. Staubsauger, elegantes Grau" (M₃) erfasst, so rückt nicht nur der Datensatz M₃, sondern auch der Datensatz M₄ ("Beutel f. Staubsauger, grün") in der Liste nach vorne. Die Korrelationsdaten umfassen etwa Informationen darüber, dass eine hohe Interaktionswahrscheinlichkeit bei der Suchanfrage S "Beutel" damit korreliert ist, dass das Feld "Volumen" nicht leer ist, während das Feld "Leistungsaufnahme" leer ist.

In einem weiteren Ausführungsbeispiel wird eine weitere Suche mit einer weiteren Suchanfrage S' durchgeführt, die einen falsch geschriebenen Suchbegriff umfasst, hier das Wort "ellegant". Erfindungsgemäß werden die Interaktionsdaten I^{S'}ᵢ für diese weiteren Suchanfrage S' dem falsch geschriebenen Suchbegriff zugeordnet, in diesem Fall also dem Wort "ellegant". Typischerweise treten Falschschreibungen mit deutlich geringerer Häufigkeit auf als die richtig geschriebenen Begriffe. Das heißt, es werden typischerweise weniger Interaktionsdaten I^{S'}ᵢ für die Falschschreibung erfasst als für den richtig geschriebenen Begriff.

Um dennoch eine möglichst große Datenmenge zur Bestimmung weiterer Relevanzdaten R^{S'}ᵢ für die weitere Suchanfrage S' zur Verfügung zu haben, kann ein Ähnlichkeitsmaß α_{S,S'} zwischen der Suchanfrage S und der weiteren Suchanfrage S' bestimmt werden. Zur Bestimmung des Ähnlichkeitsmaßes α_{S,S'} stehen verschiedene Methoden zur Verfügung. Beispielsweise kann die Reihenfolge mehrere Suchbegriffe betrachtet werden, typische Falschschreibungen können erkannt werden oder Suchanfragen können geringe Abweichungen aufweisen. Insbesondere kann eine semantische Ähnlichkeit der Suchanfragen S bestimmt werden. Ähnliche Begriffe können etwa in einem Thesaurus oder einem Übersetzungswörterbuch, nach einem Wortstammverfahren wie Stemming oder Lemmatizing, durch phonetische Ähnlichkeiten, oder durch Ähnlichkeitsverfahren wie die Levenshtein-Distanz oder ein Verfahren, wie es in der EP 2 035 965 B1 beschrieben ist, bestimmt werden. Insbesondere erlaubt dies eine Quantifizierung des Ähnlichkeitsmaßes α_{S,S'} der Suchbegriffe zueinander.

Bei ausreichender Ähnlichkeit α_{S,S'} werden nun die Interaktionsdaten I^{S}ᵢ für die Suchanfrage S auch bei der weiteren Suchanfrage S' berücksichtigt. Die Relevanzdaten R^{S'}ᵢ für S' können also für die Datensätze Mᵢ genauer bestimmt werden.

Umgekehrt werden die Interaktionsdaten I^{S'}ᵢ für die weitere Suchanfrage S' mit dem falsch geschriebenen Suchbegriff bei ausreichender Ähnlichkeit α_{S,S'} auch bei der Suchanfrage S berücksichtigt. Die Interaktionsdaten I^{S}ᵢ für die Suchanfrage S werden also zur Bestimmung der Relevanzdaten R^{S}ᵢ ergänzt durch die Interaktionsdaten I^{S'}ᵢ für die weitere Suchanfrage S'.

Insbesondere werden die Interaktionsdaten I^{S}ᵢ für die Suchanfrage S und die weiteren Interaktionsdaten I^{S'}ᵢ für die weitere Suchanfrage S' anhand des Ähnlichkeitsmaßes α_{S,S'} gewichtet, sodass etwa einander ähnlichere Suchanfragen S einander stärker beeinflussen als weniger ähnliche.

Analog zu diesem Beispiel kann das erfindungsgemäße Verfahren auch andere, insbesondere selten auftretende Suchanfragen verarbeiten, selbst wenn keine Falschschreibung vorliegt, etwa wenn mehrere Begriffe in verschiedener Reihenfolge auftreten oder synonyme Suchbegriffe verwendet werden.

In einem weiteren Ausführungsbeispiel wird nach dem Erfassen der Suchanfrage S mit dem Suchbegriff "elegant" zunächst eine Trefferliste bestimmt. Das heißt, die Relevanzdaten R^{S}ᵢ geben zunächst keine quantitative Relevanz an, sondern es wird nur bestimmt, ob einzelne Datensätze relevant sind. Insbesondere wird hier die Datenbasis nach dem Suchbegriff "elegant" durchsucht, wobei Falschschreibungen und grammatikalische Formen des Begriffs berücksichtigt werden.

Die Ausgabe der Datensätze in der Trefferliste erfolgt dabei zunächst in einer nach dem Preis geordneten Liste. Die Rangfolge kann auch nach anderen Kriterien erfolgen. Die Rangfolge spiegelt also keine Unterschiede der Relevanz der Produkte wider. Die folgende Tabelle V verdeutlicht dies, wobei die Werte der Relevanzdaten R^{S}ᵢ als "relevant (1) oder "nicht relevant" (0) dargestellt sind:

**Tabelle V**

| Mᵢ | | R^{S}ᵢ | | |
|---|---|---|---|---|
| Datensätze | | Relevanzdaten | | |
| M₁ | Suche (S) "elegant" | 1 | Ausgabe der Trefferliste: | 1. "elegant geformter Staubsauger" |
| | | | | 2. "elegantes Hochzeitskleid" |
| | | | | 3. "eleganter Hochzeitsanzug" |
| | | | | 4. "Hochzeitsschuhe, elegante Form" |
| M₂ | → | 0 | → | 5. "Beutel f. Staubsauger, elegantes |
| M₃ | | 1 | | Grau" |
| M₄ | | 0 | | |
| M₅ | | 1 | | |
| M₆ | | 1 | | |
| M₇ | | 0 | | |
| M₈ | | 1 | | |

Die Datensätze M₂, M₄, und M₇ fehlen in der Trefferliste, da sie das Wort "elegant" nicht enthalten. Aus diesem Grund kann der Nutzer nur mit den angezeigten Datensätzen Mᵢ interagieren. Beispielsweise werden nach einer Suche mit dem Suchbegriff "elegant" nur der Hochzeitsanzug M₅ und das Hochzeitskleid M₆ angeklickt, wie in Tabelle VI dargestellt:

**Tabelle VI**

| Mᵢ | | I^{S}ᵢ |
|---|---|---|
| Datensätze | | Interaktionsdaten |
| M₁ | Interaktionsdaten (ja/nein = 1/0) | 0 |
| M₂ | | 0 |
| M₃ | → | 0 |
| M₄ | | 0 |
| M₅ | | 1 |
| M₆ | | 1 |
| M₇ | | 0 |
| M₈ | | 0 |

Wie bereits oben beschrieben wurde, werden nun Korrelationsdaten K^{S,1} bis K^{S,n} bestimmt, aus denen sich ergibt, dass das Wort "Hochzeit" positiv mit der Klickwahrscheinlichkeit korreliert ist. Die Relevanzdaten R^{S}ᵢ werden entsprechend angepasst. Es wird nun eine Relevanz quantitativ bestimmt und die Datensätze Mᵢ werden in einer nach Relevanz geordneten Reihenfolge ausgegeben. Dies ist in Tabelle VII dargestellt:

**Tabelle VII**

| Mᵢ | | (neue) R^{S}ᵢ | | |
|---|---|---|---|---|
| Datensätze | | Relevanzdaten | | |
| M₁ | Suche (S) "elegant" | 4 | Ausgabe: | 1. "eleganter Hochzeitsanzug" |
| M₂ | | - | → | 2. "elegantes Hochzeitskleid" |
| M₃ | → | 5 | | 3. "Hochzeitsschuhe, elegante Form" |
| M₄ | | - | | 4. "elegant geformter Staubsauger" |
| M₅ | | 1 | | 5. "Beutel f. Staubsauger, elegantes Grau" |
| M₆ | | 2 | | |
| M₇ | | 3 | | |
| M₈ | | - | | |

Zu beachten ist dabei, dass nur für die Datensätze Mᵢ quantitative Relevanzdaten bestimmt werden, die in der Trefferliste enthalten sind (siehe Tabelle V). Dies beschränkt die Menge der zu bearbeitenden Datensätze Mᵢ, sodass die benötigte Rechenleistung zur Zuordnung der neuen Relevanzdaten R^{S}ᵢ reduziert wird. Im Unterschied zu dem oben gezeigten Ausführungsbeispiel (siehe Tabelle IV) werden allerdings die "Hochzeitsschuhe, schwarz" M₇ nicht berücksichtigt, da diese das Suchwort "elegant" nicht enthalten und bereits bei der in Tabelle V dargestellten Bestimmung der Trefferliste nicht berücksichtigt wurden.

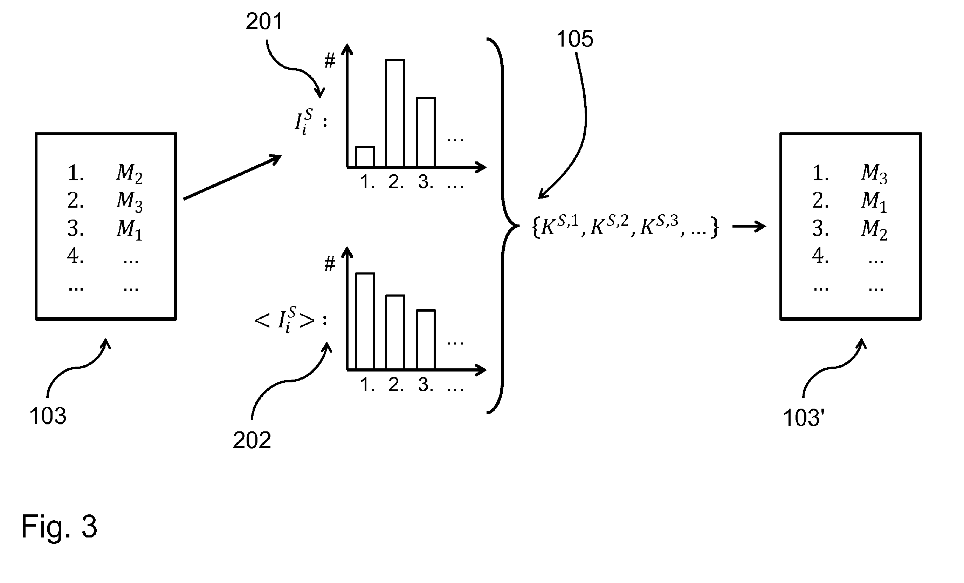

Mit Bezug zu den Figuren 2 und 3 wird die Bestimmung von Abweichungen zwischen erwarteten und tatsächlichen Interaktionsdaten erläutert.

Es wird von dem in Figur 2 dargestellten Beispiel ausgegangen: Anhand einer Suchanfrage S wurden dem Nutzer in einem Ausgabeschritt 103 Datensätzen Mᵢ ausgegeben. Der Nutzer interagiert mit diesen Datensätzen Mᵢ. In diesem Beispiel ruft er durch Anklicken auf einer Webseite Detailinformationen zu einzelnen Datensätzen Mᵢ auf. Dies wird in den tatsächlichen Interaktionsdaten I^{S}ᵢ erfasst, die in Figur 3 als "tatsächlicher Graph" 201 dargestellt sind. Hier ist entlang der Ordinatenachse die Häufigkeit der Klicks aufgetragen und entlang der Abszissenachse die Platzierung des jeweiligen Datensatzes in der im Schritt 103 ausgegebenen Liste. Diese tatsächlichen Interaktionsdaten I^{S}ᵢ werden mit erwarteten Interaktionsdaten <I^{S}ᵢ> verglichen, die als "erwarteter Graph" 202 analog zum tatsächlichen Graph 201 dargestellt sind.

Es zeigt sich, dass gemäß den erwarteten Interaktionsdaten <I^{S}ᵢ> erwartet wird, dass umso mehr Klicks zu den Datensätzen stattfinden, je höher sie in der Liste platziert sind. Ein Vergleich mit den tatsächlichen Interaktionsdaten I^{S}ᵢ zeigt jedoch, dass dies nicht der Fall ist, sondern dass der erste Eintrag weniger als die beiden folgenden Einträge geklickt wurde. Diese Information kann beim folgenden Schritt 105 zur Bestimmung der Korrelationsdaten K^{S,1} bis K^{S,n} genutzt werden. Beispielsweise kann so bei den erwarteten Interaktionsdaten <I^{S}ᵢ> eine Zielverteilung vorgegeben werden, bei der etwa hoch platzierte Einträge öfter geklickt werden. Die Erzeugung neuer Relevanzdaten R^{S}ᵢ für die Datensätze Mᵢ führt dann zur entsprechenden Neusortierung der Suchergebnisse, die bei einer erneuten Ausgabe 103' wieder ausgegeben werden können.

Bei einem weiteren Ausführungsbeispiel erfolgt eine Identifikation des Nutzers, beispielsweise durch einen Login auf einer Webseite eines Webshops. Diese Nutzeridentifikation wird zur Ergänzung der Nutzerinteraktionen und zur Suche genutzt, beispielsweise können Informationen wie das Alter und Geschlecht erfasst werden. Dies erlaubt eine weitere Anpassung der Relevanzdaten R^{S}ᵢ, etwa an eine Zielgruppe, für die besonders relevante Suchergebnisse ausgegeben werden sollen.

Im oben beschriebenen Ausführungsbeispiel sind die Eingabeeinheit 5, die Anzeigeeinheit 7 und die Interaktionserfassungseinheit 9 von einem einzelnen Nutzergerät 2 umfasst, beispielsweise von einem Personalcomputer oder Mobiltelefon. In einer weiteren Ausbildung sind diese Einheiten einzeln oder zu mehreren in verschiedenen Geräten implementiert. Dabei können insbesondere physische Nutzerinteraktionen erfasst werden, beispielsweise in einem Ladenlokal oder auf einer Messeausstellung.

Zum Beispiel sind zumindest die Eingabeeinheit 5 und die Anzeigeeinheit 7 in einem Gerät integriert, etwa in einer Anwendung auf einem Mobiltelefon, und eine Interaktionserfassungseinheit 9 ist getrennt davon angeordnet, etwa an einer Kasse des Ladenlokals. In diesem Beispiel führt der Nutzer mit seinem Mobiltelefon eine Suche mit einer Suchanfrage S aus. Beispielsweise kann er nach einem Suchbegriff suchen oder die tagesaktuellen Angebote aufrufen. Es wird ihm eine Liste von Produkten Pᵢ angezeigt und er kann etwa Detailinformationen zu einzelnen Produkten Pᵢ ausgeben oder sich den Weg zu dem Produkt Pᵢ anzeigen lassen. Kauft der Nutzer eines der angezeigten Produkte Pᵢ, so erfasst die Kasse des Ladenlokals diese Nutzerinteraktion. Wird der Nutzer bei diesem Vorgang identifiziert, etwa durch einen Login, eine Kreditkarte oder eine Kundenkarte, so kann der von der Kasse erfasste Kauf den Interaktionsdaten I^{S}ᵢ zu der auf dem Mobiltelefon abgefragten Suchanfrage S zugeordnet werden. Die Interaktionsdaten I^{S}ᵢ umfassen in diesem Fall Interaktionen sowohl durch das Mobiltelefon als auch durch den Kaufvorgang mit der physischen Waren.

Statt des Mobiltelefons kann auch etwa ein Terminalcomputer in dem Ladenlokal verwendet werden oder der Nutzer kann einen Verkäufer um Auskunft bitten. Zur Erfassung von physischen Nutzerinteraktionen können etwa Transponder an den Produkten Pᵢ, insbesondere an ihrer Verpackung, angebracht sein, allerdings kann auch der Nutzer einen Transponder mit sich führen, beispielsweise in Form eines geeigneten Nutzergeräts 2 oder eines Transponders in einer Kunden- oder Kreditkarte oder an einem Einkaufswagen. Ein solcher, dem Nutzer zugeordneter Transponder kann etwa von Einrichtungen in den Geschäftsräumen ausgelesen werden, um die Position des Nutzers, etwa vor dem Regal mit dem Produkt Pᵢ, oder seine Interaktionen mit Produkten Pᵢ zu erfassen.

Die Erfassung physischer Nutzerinteraktionen kann auch durch andere Einrichtungen erfolgen, beispielsweise durch ein Kamerasystem oder eine Datenbrille des Nutzers, die etwa erfassen, wo sich der Nutzer befindet, ob der Nutzer ein Produkt Pᵢ aus dem Regal nimmt, es in den Einkaufswagen legt oder kauft. Ein solches System kann auch den Nutzer identifizieren oder erfassen, welche Produkte Pᵢ der Nutzer betrachtet. Das Kamerasystem kann etwa im Geschäft angebracht oder mobil sein, beispielsweise als Kamera einer Datenbrille des Nutzers. Ferner kann eine Kasseneinrichtung Kaufvorgänge als Nutzerinteraktionen erfassen und an die Erfassungsschnittstelle 4 übertragen.

Wichtig ist hierbei, dass die Nutzerinteraktionen mit den Produkten Pᵢ den Ergebnissen der Suche mit der Suchanfrage S zugeordnet werden können. Dies kann insbesondere durch einen Login des Nutzers implementiert werden.

### Bezugszeichen

- Mᵢ: Datensätze
- Pᵢ: Produkte
- A¹ᵢ bis Aⁿᵢ: Attribute
- S: Suchanfrage
- S': Weitere Suchanfrage
- R^{S}ᵢ: Relevanzdaten
- R^{S'}ᵢ: Weitere Relevanzdaten
- I^{S}ᵢ: Interaktionsdaten
- I^{S'}ᵢ: Weitere Interaktionsdaten
- K^{S,1} bis K^{S,n}: Korrelationsdaten
- K^{S',1} bis K^{S',n}: Weitere Korrelationsdaten
- α_{S,S'}: Ähnlichkeitsmaß
- 1: Suchmaschine
- 2: Nutzergerät
- 3: Datenspeichereinheit
- 4: Erfassungsschnittstelle der Suchmaschine
- 5: Eingabeeinheit
- 6: Ausgabeeinheit der Suchmaschine
- 7: Anzeigeeinheit
- 8: Relevanzbestimmungseinheit
- 9: Interaktionserfassungseinheit
- 101: Erfassen einer Suchanfrage
- 102: Zuordnen von Relevanzdaten
- 103: Ausgabe von Datensätzen
- 103': Erneute Ausgabe von Datensätzen
- 104: Erfassung von Interaktionsdaten
- 105: Bestimmung einer Korrelationsdaten
- 106: Erneutes Erzeugen von Relevanzdaten
- 201: Tatsächlicher Graph der Interaktionsdaten
- 202: Erwarteter Graph der Interaktionsdaten

## Patentansprüche

1. Verfahren zum Durchsuchen einer Datenbasis mit Datensätzen (Mᵢ), wobei die Datensätze (Mᵢ) Attribute (A¹ᵢ bis Aⁿᵢ) umfassen, bei dem, wenn eine Suchanfrage (S) erfasst wird,
- den Datensätzen (Mᵢ) Relevanzdaten (R^{S}ᵢ) für die Suchanfrage (S) zugeordnet werden,
- anhand der Relevanzdaten (R^{S}ᵢ) zumindest eine Teilmenge der Datensätze (Mᵢ) ausgegeben wird,
- Interaktionsdaten (I^{S}ᵢ) erfasst werden über Nutzerinteraktionen mit den Datensätzen (Mᵢ), die zu der Suchanfrage (S) ausgegeben wurden,
- Korrelationsdaten (K^{S,1} bis K^{S,n}) bestimmt werden, welche die Korrelation zwischen den einzelnen Attributen (A¹ᵢ bis Aⁿᵢ) und den Interaktionsdaten (I^{S}ᵢ) für die Suchanfrage (S) angeben, und
- die Relevanzdaten (R^{S}ᵢ) der Datensätze (Mᵢ) für die Suchanfrage (S) erneut erzeugt werden unter Einbeziehung der Korrelationsdaten (K^{S,1} bis K^{S,n}) und der Attribute (A¹ᵢ bis Aⁿᵢ) der Datensätze (Mᵢ).

2. Verfahren nach Anspruch 1,
**gekennzeichnet dadurch, dass**
beim Bestimmen der Korrelationsdaten (K^{S,1} bis K^{S,n}) Abweichungen zwischen erwarteten (<I^{S}ᵢ>) und tatsächlichen Interaktionsdaten (I^{S}ᵢ) bestimmt werden.

3. Verfahren nach einem der vorhergehenden Ansprüche,
**gekennzeichnet dadurch, dass**
die Suchanfrage (S) zumindest einen Suchbegriff (S1) umfasst.

4. Verfahren nach einem der vorhergehenden Ansprüche,
**gekennzeichnet dadurch, dass**
die Suchanfrage (S) eine Auswahl zumindest einer dem Nutzer vorgegebenen Suchoption umfasst.

5. Verfahren nach einem der vorhergehenden Ansprüche,
**gekennzeichnet dadurch, dass**
die Relevanzdaten (R^{S}ᵢ) der Datensätze (Mᵢ) für die Suchanfrage (S) anhand eines Empfehlungsdienstes erzeugt werden.

6. Verfahren nach einem der vorhergehenden Ansprüche,
**gekennzeichnet dadurch, dass**
die Korrelationsdaten (K^{S,1} bis K^{S,n}) ferner anhand von weiteren Interaktionsdaten (I^{S'}ᵢ) bestimmt werden, wobei die weiteren Interaktionsdaten (I^{S'}ᵢ) Nutzerinteraktionen mit den Datensätzen (Mᵢ) betreffen, die zu einer weiteren Suchanfrage (S') ausgegeben wurden, wobei die weitere Suchanfrage (S') zumindest ein vorgegebenes Ähnlichkeitsmaß (α_{S,S'}) zu der Suchanfrage (S) aufweist.

7. Verfahren nach einem der vorhergehenden Ansprüche,
**gekennzeichnet dadurch, dass**
die Datensätze (Mᵢ) der Teilmenge bei der Ausgabe nach einer Rangfolge angeordnet sind, die von den Relevanzdaten (R^{S}ᵢ) abhängt.

8. Verfahren nach einem der vorhergehenden Ansprüche,
**gekennzeichnet dadurch, dass**
die Nutzerinteraktionen einen Aufruf von Informationen zu den Datensätzen (Mᵢ) und/oder ein Vormerken und/oder einen Kaufvorgang von Produkten (Pᵢ), die den Datensätzen (Mᵢ) zugeordnet sind, umfassen.

9. Verfahren nach einem der vorhergehenden Ansprüche,
**gekennzeichnet dadurch, dass**
beim Bestimmen der Korrelationsdaten (K^{S,1} bis K^{S,n}) die Interaktionsdaten (I^{S}ᵢ) nach der Art der Nutzerinteraktionen gewichtet werden.

10. Verfahren nach einem der vorhergehenden Ansprüche,
**gekennzeichnet dadurch, dass**
beim Bestimmen der Korrelationsdaten (K^{S,1} bis K^{S,n}) die Nutzerinteraktionen anhand ihrer Häufigkeit gewichtet werden.

11. Verfahren nach einem der vorhergehenden Ansprüche,
**gekennzeichnet dadurch, dass**
die Attribute (A¹ᵢ bis Aⁿᵢ) Fließtexte, numerische Angaben und/oder definierte Ausprägungen von den Datensätzen (Mᵢ) zugeordneten Produkten (Pᵢ) umfassen.

12. Verfahren nach einem der vorhergehenden Ansprüche,
**gekennzeichnet dadurch, dass**
in Verbindung mit den Nutzerinteraktionen eine Nutzeridentifikation durchgeführt wird und die Suche ferner anhand der Daten zu dem Nutzer durchgeführt wird.

13. Computerprogramm mit Programmcode zur Durchführung des Verfahrens gemäß einem der Ansprüche 1 bis 12, wenn der Programmcode von einem Computer ausgeführt wird.

14. Suchmaschine (1) zum Durchsuchen einer auf einer Datenspeichereinheit (3) gespeicherten Datenbasis mit Datensätzen (Mi), wobei die Datensätze (Mᵢ) Attribute (A¹ᵢ bis Aⁿᵢ) umfassen, mit
- einer Erfassungsschnittstelle (4), durch die eine Suchanfrage (S) erfassbar ist,
- einer Relevanzbestimmungseinheit (8), durch die den Datensätzen (Mᵢ) Relevanzdaten (R^{S}ᵢ) für die Suchanfrage (S) zuordenbar sind, und
- einer Ausgabeeinheit (6), durch die anhand der Relevanzdaten (R^{S}ᵢ) zumindest eine Teilmenge der Datensätze (Mᵢ) ausgebbar ist,
**dadurch gekennzeichnet, dass**
- durch die Erfassungsschnittstelle (4) ferner Interaktionsdaten (I^{S}ᵢ) über Nutzerinteraktionen mit den Datensätzen (Mᵢ), die zu der Suchanfrage (S) ausgegeben wurden, erfassbar sind,
- durch die Relevanzbestimmungseinheit (8) ferner Korrelationsdaten (K^{S,1} bis K^{S,n}) bestimmbar sind, welche die Korrelation zwischen den einzelnen Attributen (A¹ᵢ bis Aⁿᵢ) und den Interaktionsdaten (I^{S}ᵢ) für die Suchanfrage (S) angeben, und
- die Relevanzdaten (R^{S}ᵢ) der Datensätze (Mᵢ) für die Suchanfrage (S) erneut erzeugbar sind unter Einbeziehung der Korrelationsdaten (K^{S,1} bis K^{S,n}) und der Attribute (A¹ᵢ bis Aⁿᵢ) der Datensätze (Mᵢ).

15. Suchmaschine (1) nach Anspruch 14,
**dadurch gekennzeichnet, dass**
bei den durch die Erfassungsschnittstelle (4) erfassbaren Nutzerinteraktionen eine räumliche Nähe zwischen einem Nutzer und Produkten (Pᵢ), die den Datensätzen (Mᵢ) zugeordnet sind, erfassbar ist.
